# DEMANDE DE BREVET EUROPEEN

(11) **EP 4 572 351 A1**
(43) Date de publication de la demande: **18.06.2025**
(21) Numéro de dépôt: 24219518.8
(22) Date de dépôt: 12.12.2024
(51) Int. Cl.: H04W 4/80, H04B 1/713, H04L 1/00, H04L 1/08, H04L 69/14, H04L 5/00

(54) **PROCÉDÉ DE TÉLÉCOMMUNICATION BLUETOOTH LOW ENERGY MIS EN OEUVRE ENTRE UN PREMIER DISPOSITIF DE TÉLÉCOMMUNICATION ET UN DEUXIÈME DISPOSITIF DE TÉLÉCOMMUNICATION**

(30) Priorité: 13.12.2023 FR 2314093
(71) Demandeur: Commissariat à l'Energie Atomique et aux Energies Alternatives, 75015 Paris (FR)
(72) Inventeur: CAROFF, Tristan, 38054 GRENOBLE Cedex 09 (FR); GALLARDO, Maxime, 38054 GRENOBLE Cedex 09 (FR); GROS, Jean-Philippe, 38054 GRENOBLE Cedex 09 (FR)
(74) Mandataire: Atout PI Laplace

(57) **Abrégé**

Procédé de télécommunication Bluetooth Low Energy mis en oeuvre par un premier dispositif de télécommunication (10),
des trames TR_i, i = n-N à n, comportant un premier champ de données courantes et N seconds champs de données transmises dans le premier champ de trames précédemment transmises ;
comprenant, lors de la construction de la trame TR_n, l'insertion :
- dans le premier champ de données de la trame TR_n, de l'ensemble de données D_n ;
- dans le jème second champ de données de la trame TR_n, j = 1 à N, de l'ensemble de données D_(n-j) précédemment transmis dans le premier champ de la trame TR_(n-j) ;

le canal sélectionné pour la transmission de la trame TR_n-j étant celui succédant, dans ladite boucle définie, au canal qui avait été sélectionné pour la transmission de la trame TR_(n-j-1) au temps de transmission t_(n-j-1), j = 0 à N.

## Description

### Domaine technique :

L'invention se situe dans le domaine des télécommunications Bluetooth Low Energy (BLE), qui sont notamment mises en oeuvre dans les applications relatives aux objets connectés (IOT, de l'anglais « Internet of Things »).

### Technique antérieure :

On distingue généralement quatre rôles alternatifs principaux à un dispositif adapté pour mettre en oeuvre des télécommunications BLE :
- « central » : relatif à un dispositif qui découvre les périphériques et les diffuseurs BLE avec la capacité de se connecter aux périphériques ;
- « peripheral » : relatif à un dispositif qui fait connaître son existence avec la capacité d'accepter des connexions à partir d'un dispositif « central » ;
- « broadcaster » : relatif à un dispositif qui envoie des paquets (« advertising packets ») sans autoriser aucune connexion ;
- « observer » : relatif à un dispositif qui découvre les dispositifs « peripheral » et « broadcaster », mais sans la capacité d'accepter les connexions d'un dispositif « central ».

Un dispositif « peripheral » ou « broadcaster » commence toujours par un mode « advertising » avant d'accepter une connexion. En fait, les paquets de type « advertising packet » sont le seul moyen permettant à un dispositif « central » ou « observer » de découvrir un dispositif « peripheral » or « broadcaster ». La différence entre deux dispositifs BLE en mode connecté et en mode advertising/discovery est que le mode connecté permet un transfert de données bidirectionnel entre les deux appareils connectés. En revanche, un appareil en mode advertising (peripheral or broadcaster) ne peut recevoir aucune donnée d'un dispositif observer/central dans cet état.

En mode « advertising », un dispositif envoie des paquets comportant des données utiles. Ces paquets sont envoyés généralement à intervalle fixé, défini comme l'intervalle d'advertising (en anglais « advertising interval »).

Il y a 40 canaux RadioFréquences (RF) en BLE, espacés les uns des autres de centre à centre par 2 MHz. Trois de ces canaux, numérotés 37, 38, 39 sont les canaux primaires d'advertising (« Primary Advertising Channels » en anglais). Les 37 autres canaux sont les canaux secondaires d'advertising (« Secundary Advertising Channels » en anglais) et ils sont utilisés aussi pour le transfert de données pendant une connexion. Les canaux secondaires sont utilisés comme canaux « auxiliaires », ce qui signifie qu'un dispositif doit d'abord transmettre des paquets d'advertising sur les canaux d'advertising principaux avant d'envoyer des paquets d'advertising sur les canaux secondaires. Si un appareil souhaite utiliser les canaux publicitaires secondaires, il envoie des paquets d'advertising sur les canaux principaux qui indiquent les canaux secondaires à utiliser.

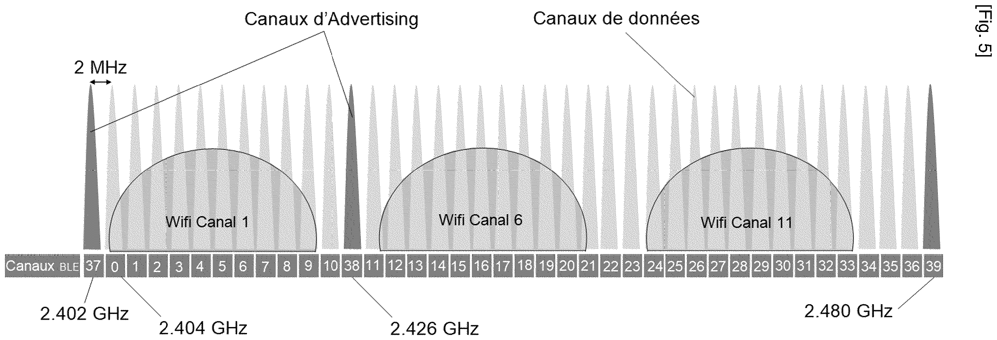

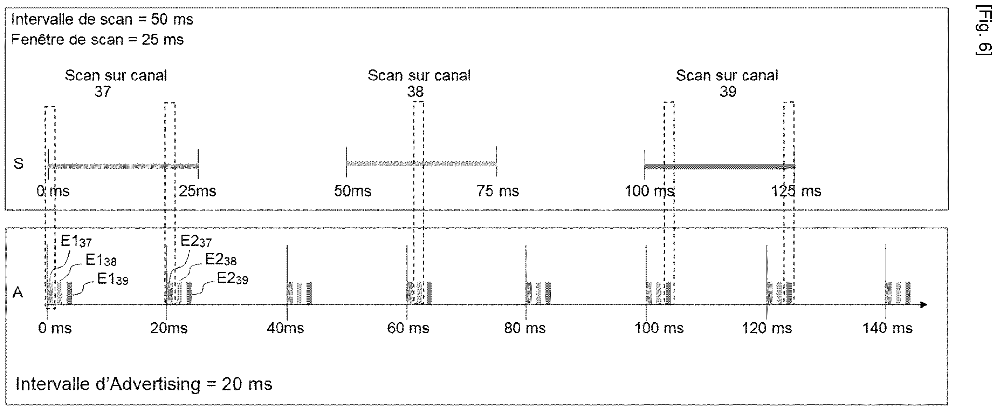

Le fonctionnement classique d'une communication Bluetooth Low Energy (BLE) en en mode advertising (broadcast / non connecté) entre un premier dispositif BLE et un deuxième dispositif, par exemple de type smartphone est illustré en référence à la figure 5 et à la figure 6.

Afin de limiter les interférences avec d'autres objets connectés et les bandes wifi, les objets communiquants en BLE en mode advertising émettent leurs données sur les canaux 37, 38 et 39 (dédiés au BLE) de manière consécutive. L'énergie moyenne requise pour l'émission d'une trame de 47 octets est de l'ordre de 33 à 45 µJ.

Ainsi, en référence à la partie basse de la figure 6, les mêmes données sont émises par le premier dispositif, libellé A, successivement sur le canal 37, puis 38, puis 39 correspondant aux émissions E1₃₇, E1₃₈, E1₃₉. Puis les données utiles suivantes sont émises, après un intervalle d'advertising, par exemple de durée égale à 20 ms (milliseconde) successivement sur le canal 37, puis 38, puis 39 : E2₃₇, E2₃₈, E2₃₉.

Classiquement, en référence à la partie basse de la figure 6, le récepteur BLE (Observer/scanner), libellé S, lance, selon une période de l'ordre de 50 ms à 200 ms (intervalle de scan, en anglais « scanning interval »), une phase d'écoute sur un canal à la fois. Le temps de scan/lecture est généralement de l'ordre de 25 ms à 100 ms (fenêtre de scan, en anglais « scanning window »). Puis il arrête d'écouter pendant un intervalle du même ordre de grandeur, avant de recommencer à écouter sur le canal d'advertising suivant. Il s'agit ainsi d'une rotation de canal en écoute sur les canaux 37, 38 et 39.

Il n'est pas recommandé/préconisé d'émettre sur un seul canal BLE fixe car cela baisse l'immunité aux interférences et augmente le risque de collisions entre les données.

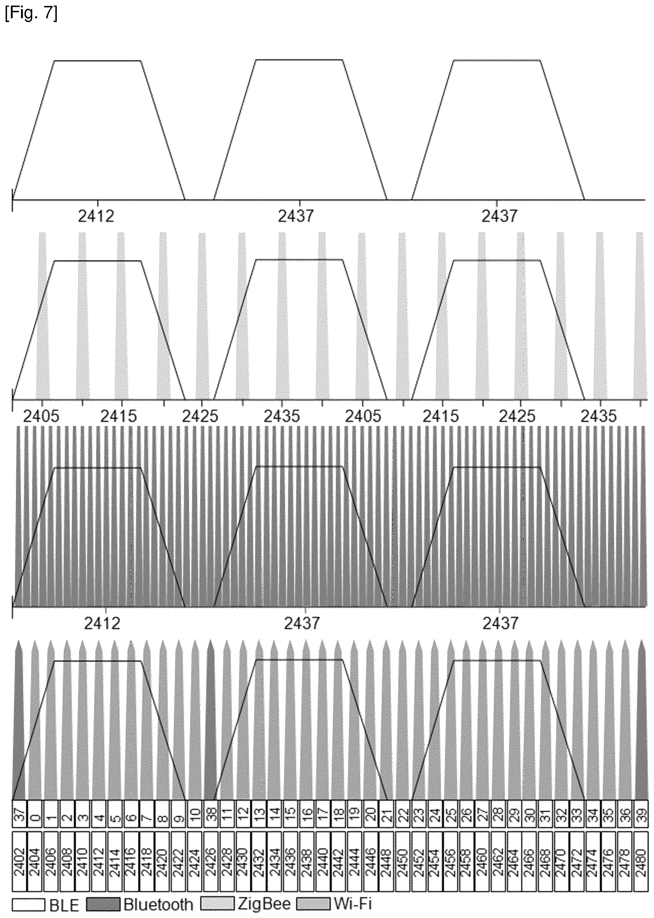

Le canal utilise une bande de fréquence qui peut aussi être utilisé par d'autres dispositifs utilisant la technologie BLE mais aussi le Bluetooth classique, le Wi-Fi, le ZigBee et le Thread (cf. figure 7 extraite de : S. Silva, S. Soares, T. Fernandes, A. Valente and A. Moreira, "Coexistence and interférence tests on a Bluetooth Low Energy front-end," 2014 Science and Information Conference, London, UK, 2014, pp. 1014-1018, doi: 10.1109/SAI.2014.6918312), ce qui augmente d'autant plus le risque d'interférence entre les différents canaux. C'est pourquoi, il est recommandé d'émettre sur les 3 canaux dédiés en mode BLE advertising comme décrit plus haut.

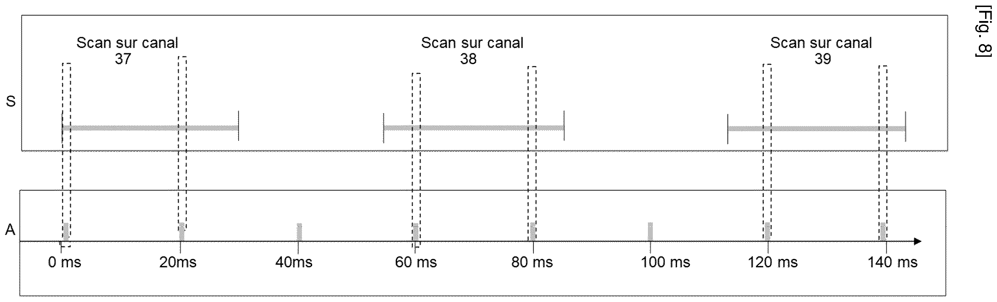

Certaines publications mentionnent une transmission/réception sur 1 seul canal (BLE) afin de minimiser l'énergie consommée à l'envoi de donnée. Pour ce genre d'expérimentation, comme illustré en figure 8, un lecteur/sniffer, S, de trame Bluetooth dédié (permettant la lecture sur 1 canal en continu, par exemple le canal 38) est généralement utilisé, l'émission n'ayant lieu elle aussi que sur ce même canal par le premier dispositif, A.

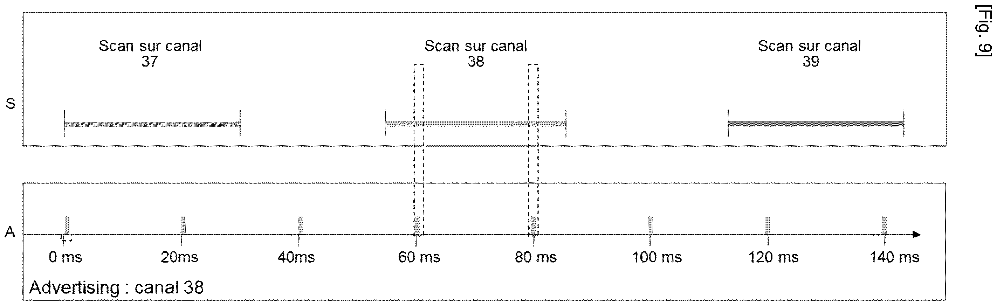

Il est aussi envisageable, comme illustré en figure 9, d'utiliser ce type d'émission sur un récepteur BLE type smartphone, libellé, Se, en rotation de canal à la réception avec temps mort entre chaque changement de canal, mais cela limite grandement le nombre de trames reçues.

Il existe un besoin de minimiser l'énergie nécessaire pour communiquer en BLE, notamment en BLE advertising, par exemple à destination d'un récepteur monocanal type Smartphone, tout en garantissant la fiabilité de la communication (limitation des problèmes liés aux interférences) et la restitution des données (minimisation de la perte de données).

### Résumé de l'invention :

A cet effet, suivant un premier aspect, la présente invention décrit un procédé de télécommunication Bluetooth Low Energy mis en oeuvre entre un premier dispositif de télécommunication et un deuxième dispositif de télécommunication, des trames TR_i ayant été précédemment transmises au deuxième dispositif de télécommunication par le premier dispositif de télécommunication à des temps de transmission successifs respectifs t_i, i = n-N à n-1, N, i et n entiers et N ≥3 ; P canaux de télécommunication ayant été attribués pour les télécommunications Bluetooth Low Energy entre lesdits premier et deuxième dispositifs ; ledit procédé comprenant les étapes suivantes mises en oeuvre par le premier dispositif de télécommunication pour la transmission, au temps de transmission t_n, d'un nouvel ensemble de données à transmettre D_n :
obtention du nouvel ensemble de données à transmettre D_n ;
construction d'une trame, nommée trame TR_n, en fonction d'au moins l'ensemble de données D_n obtenu ;
sélection d'un canal de télécommunication parmi lesdits P canaux de télécommunication ayant été attribués ;
transmission, sur le canal sélectionné, de la trame T_n construite;
ledit procédé étant caractérisé en ce que les étapes suivantes sont mises en oeuvre par le premier dispositif de télécommunication pour la transmission au temps de transmission t_n de la trame TR_n, chacune des trames TR_i, i = n-N à n, étant conforme à un format de trame prédéfini comportant un premier champ de données destiné à comporter les données courantes et comportant N seconds champs de données destiné à comporter des données transmises dans le premier champ de trames précédemment transmises ;
lors de la construction de la trame TR_n :
   insertion, dans le premier champ de données de la trame TR_n, de l'ensemble de données D_n ;
   insertion dans le jème second champ de données de la trame TR_n, j = 1 à N, de l'ensemble de données D_(n-j) précédemment transmis dans le premier champ de la trame TR_(n-j) ;
   lors de la sélection du canal de communication :
une boucle ayant été définie sur les P canaux ordonnés selon un ordre déterminé, le canal sélectionné pour la transmission de la trame TR_n est celui succédant, dans ladite boucle définie, au canal qui avait été sélectionné pour la transmission de la trame TR_(n-1) au temps de transmission t_(n-1) ; le canal précédemment sélectionné pour la transmission de la trame TR_n-j étant celui succédant, dans ladite boucle définie, au canal qui avait été sélectionné pour la transmission de la trame TR_(n-j-1) au temps de transmission t_(n-j-1), j = 1 à N ;
ladite trame TR_n n'étant en outre émise que sur le seul canal sélectionné et n'étant notamment pas réémise sur un quelconque autre des P canaux.

L'invention permet de minimiser l'énergie nécessaire pour communiquer en BLE, ce qui est particulièrement intéressant dans les applications loT nécessitant une communication basse consommation sans fil ou dans les systèmes avec récupération d'énergie.

Dans des modes de réalisation, un tel procédé comprendra en outre l'une au moins des caractéristiques suivantes :
- le délai entre deux temps de transmission successifs est constant ;
- l'ensemble de données D_i indique le temps de transmission t_i, i= n-N à n, de la trame TR_i ;
- une durée de scan T_{SW} ayant été prédéfinie et une période T_{Si} ayant été définie, le deuxième dispositif de télécommunication met en oeuvre, toutes les périodes T_{Si} une étape de scan pendant la durée de scan prédéfinie T_{SW}. sur un canal considéré parmi les P canaux, lesdits P canaux étant considérés chacun l'un après l'autre, avant de recommencer.

Suivant un autre aspect, l'invention décrit un programme d'ordinateur destiné à être stocké dans la mémoire d'un premier dispositif de télécommunication comprenant en outre un microcalculateur, ledit programme d'ordinateur comprenant des instructions qui, lorsqu'elles sont exécutées sur le microcalculateur, mettent en oeuvre les étapes d'un procédé selon le premier aspect de l'invention.

L'invention décrit également un support non transitoire lisible par ordinateur stockant un tel programme informatique.

Suivant un autre aspect, l'invention décrit un dispositif de télécommunication, nommé ci-après premier dispositif de télécommunication, adapté pour mettre en oeuvre une télécommunication Bluetooth Low Energy avec un deuxième dispositif de télécommunication, des trames TR_i ayant été précédemment transmises au deuxième dispositif de télécommunication par le dispositif de télécommunication à des temps de transmission successifs respectifs t_i, i = n-N à n-1, N, i et n entiers et N ≥3 ;
P canaux de télécommunication ayant été attribués pour les télécommunications Bluetooth Low Energy entre lesdits premier et deuxième dispositifs ;
le premier dispositif de télécommunication étant adapté, en vue de transmettre, au temps de transmission t_n, un nouvel ensemble de données à transmettre D_n, pour obtenir le nouvel ensemble de données à transmettre D_n, pour construire une trame, nommée trame TR_n, en fonction d'au moins l'ensemble de données D_n obtenu, pour sélectionner un canal de télécommunication parmi lesdits P canaux de télécommunication ayant été attribués, pour transmettre, sur le canal sélectionné, la trame T_n construite;
ledit premier dispositif de télécommunication étant caractérisé en ce que le premier dispositif de télécommunication, en vue de la transmission au temps de transmission t_n de la trame TR_n, chacune des trames TR_i, i = n-N à n, étant conforme à un format de trame prédéfini comportant un premier champ de données destiné à comporter les données courantes et comportant N seconds champs de données destiné à comporter des données transmises dans le premier champ de trames précédemment transmises, lors de la construction de la trame TR_n, insérer, dans le premier champ de données de la trame TR_n, l'ensemble de données D_n, insérer dans le jème second champ de données de la trame TR_n, j = 1 à N, l'ensemble de données D_(n-j) précédemment transmis dans le premier champ de la trame TR_(n-j) ;
ledit premier dispositif de télécommunication étant adapté pour, une boucle ayant été définie sur les P canaux ordonnés selon un ordre déterminé, sélectionner comme canal de communication pour la transmission de la trame TR_n, celui succédant, dans ladite boucle définie, au canal qui avait été sélectionné pour la transmission de la trame TR_(n-1) au temps de transmission t_(n-1) ; le canal précédemment sélectionné pour la transmission de la trame TR_n-j étant celui succédant, dans ladite boucle définie, au canal qui avait été sélectionné pour la transmission de la trame TR_(n-j-1) au temps de transmission t_(n-j-1), j = 1 à N ;
ladite trame TR_n n'étant en outre émise que sur le seul canal sélectionné et n'étant notamment pas réémise sur un quelconque autre des P canaux.

Dans des modes de réalisation, ledit dispositif de télécommunication comprend en outre l'une et/ou l'autre des dispositions suivantes :
- il est adapté pour placer un délai constant entre deux temps de transmission successifs ;
- il est adapté pour indiquer dans l'ensemble de données D_i le temps de transmission t_i, i= n-N à n, de la trame TR J.

Suivant un autre aspect, l'invention est relative à un système de télécommunication Bluetooth Low Energy comprenant un premier dispositif de télécommunication (10) selon l'invention, dans lequel une durée de scan T_{SW} ayant été prédéfinie et une période T_{Si} ayant été définie, ledit système comprenant en outre le deuxième dispositif de télécommunication, lequel est adapté pour effectuer, toutes les périodes T_{Si} un scan pendant la durée de scan prédéfinie T_{SW} sur un canal considéré parmi les P canaux, lesdits P canaux étant considérés chacun l'un après l'autre, avant de recommencer.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple.
[Fig. 1] La figure 1 est une illustration d'un système de télécommunication BLE dans un mode de réalisation de l'invention ;
[Fig. 2] La figure 2 est un organigramme d'étapes d'un procédé de télécommunication BLE dans un mode de réalisation de l'invention ;
[Fig. 3] La figure 3 illustre les données reçues et reconstruites dans un mode de réalisation de l'invention ;
[Fig. 4] La figure 4 est un exemple de composition de trame transmise dans un mode de réalisation de l'invention ;
[Fig. 5] La figure 5 représente les canaux de données mis en oeuvre dans des communications BLE ;
[Fig. 6] La figure 6 illustre un fonctionnement selon l'art antérieur d'une communication BLE ;
[Fig. 7] La figure 7 représente les spectres Wi-Fi, ZigBee, Bluetooth et BLE ;
[Fig. 8] La figure 8 illustre un fonctionnement selon l'art antérieur d'une communication BLE ;
[Fig. 9] La figure 9 illustre un fonctionnement selon l'art antérieur d'une communication BLE ;
[Fig. 10] La figure 10 illustre le fonctionnement d'une communication BLE dans un mode de réalisation de l'invention ;
[Fig. 11] La figure 11 est une représentation schématique d'une application de l'invention dans un mode de réalisation.

Des références identiques peuvent être utilisées dans des figures différentes lorsqu'elles désignent des éléments identiques ou comparables.

### Description détaillée :

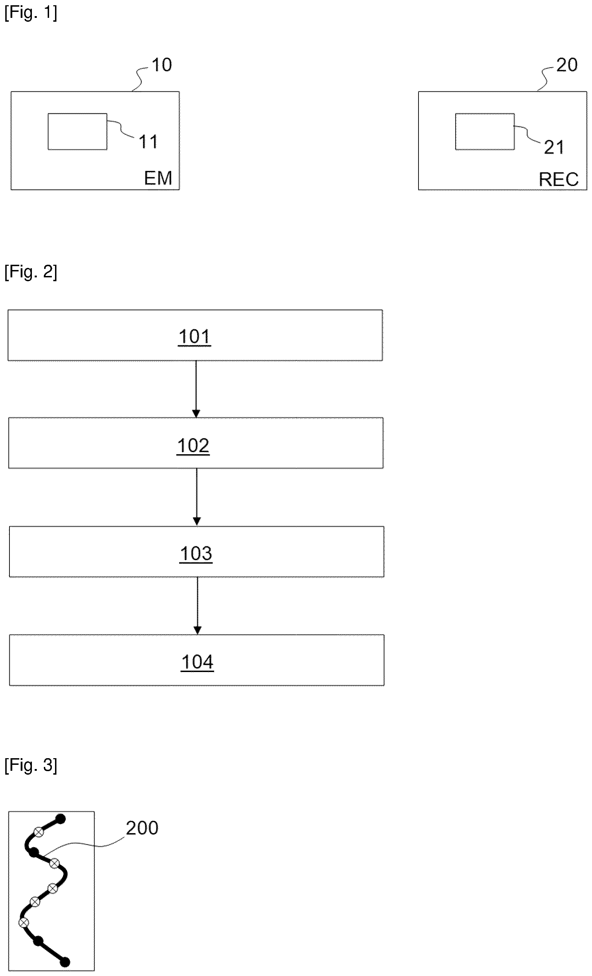

Sur la figure 1, un système de télécommunication BLE dans un mode de réalisation de l'invention est représenté. Il comporte deux dispositifs de communication BLE adaptés pour mettre en oeuvre entre eux un procédé de télécommunication BLE dans un mode de réalisation de l'invention : un premier dispositif 10 de télécommunication (EM 10) et un deuxième dispositif 20 de télécommunication (REC 20). Le premier dispositif 10 comporte un module d'émission BLE 11, y compris une antenne d'émission BLE.

Le premier dispositif 10 est par exemple autonome en énergie et est mis en place sur un ski alpin. Il est adapté pour transmettre des premières données relatives à la durée et l'intensité de l'utilisation du ski (cumul dans le temps) et la classification du niveau du skieur (l'évaluation de l'intensité de déformation du ski). Il comprend par exemple un ou plusieurs bloc(s) de traitement (non représentés), par exemple un capteur (d'effort) et/ou une horloge. Des données utiles provenant de la sortie du bloc de traitement (ou de celle des bloc(s) de traitement) sont transmises en entrée du module d'émission BLE 11 qui est adapté pour les émettre en Bluetooth Low Energy (BLE) (mode advertising) en temps réel à destination du dispositif REC 20, par exemple un Smartphone.

Le deuxième dispositif, REC 20 comporte un module de réception Bluetooth 21, y compris une antenne de réception Bluetooth. Ce module de réception est par exemple de type BLE et est nommé ci-après module BLE 21 ; il est adapté pour recevoir les données issues de l'émission par le premier dispositif 10. Le dispositif REC 20 est adapté pour traiter ces données reçues et obtenir, en fonction de ces données une fois traitées, des évaluations de la durée et l'intensité de l'utilisation du ski (cumul dans le temps) et la classification du niveau du skieur.

Le module d'émission BLE 11 est adapté pour mettre en oeuvre les étapes qui lui incombent du procédé de télécommunication BLE selon l'invention décrit ci-dessous dans un mode de réalisation de l'invention.

Le module de réception BLE 21 est adapté pour mettre en oeuvre les étapes qui lui incombent du procédé de télécommunication BLE selon l'invention décrit ci-dessous dans un mode de réalisation de l'invention.

P canaux de télécommunication ont préalablement été attribués pour les télécommunications Bluetooth Low Energy en mode advertising, avec P nombre entier supérieur ou égal à 2. Par exemple, P est choisi égal à 3 et les canaux sont les canaux 37, 38, 39.

Une boucle a été prédéfinie sur les P canaux ordonnés selon un ordre déterminé. Par exemple, ici, la boucle est canal 37, puis canal 38, puis canal 39, retour au début de la boucle, i.e. retour au canal 37, puis canal 38, puis canal 39 etc.

Dans des variantes, l'ordre déterminé est 37-38-39 ou 37-39-38. Il peut en outre comporter une ou des répétitions (par exemple 37-37-38-39) ou encore un ou des décalages.

Un procédé de télécommunication BLE dans un mode de réalisation de l'invention est maintenant décrit en référence à la figure 2. Les étapes de ce procédé sont itérées dès qu'un nouvel ensemble de données est à émettre.

Dans une étape 101, le module d'émission BLE 11 obtient le nouvel ensemble de données à émettre. On considère ici qu'il s'agit du n^{ème} ensemble de données à émettre, nommé D_n correspondant à la n^{ème} itération du procédé.

Chacune des trames TR_i a été précédemment préparée par le module d'émission 11, suite à l'obtention par ce dernier du i^{ème} ensemble de données à émettre, puis transmise au dispositif REC 20 à un temps de transmission respectif t_i, et ce dans une i^{ème} itération du procédé décrit en figure 2. Les temps de transmission t_i se succèdent dans le temps. On considère que i = n-N à n-1, que N, i et n sont entiers et N ≥3.

Dans un mode de réalisation, on prend la plus grande valeur possible pour N, dans la limite de la taille de la trame imposé dans le protocole BLE.

Dans une étape 102, le module d'émission BLE 11 construit la trame TR_n, en fonction notamment du n^{ème} ensemble de données obtenu, D_n.

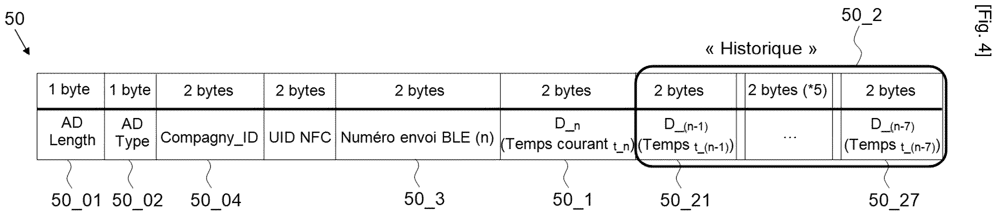

Chacune des trames construites, puis transmises est conforme à un format de trame prédéfini 50, représenté en figure 4 dans un mode de réalisation de l'invention, comportant un premier champ de données 50_1 destiné à comporter l'ensemble de données obtenu à l'étape 101 de l'itération courante et comportant un ensemble 50_2 de N seconds champs de données destiné à comporter les ensembles de données obtenus à l'étape 101 des N itérations précédentes.

Dans l'exemple représenté en figure 4, N = 7 et les 7 seconds champs de données sont référencés respectivement 50_1, 50_2, 50_7 ; chacun des premier et seconds champs de données ont ici pour taille 2 octets. L'ensemble de données obtenu D_n est par exemple l'horodatage de l'émission de la trame TR_n, i.e. le temps d'émission t_n pour l'itération n du procédé (l'horodatage est, dans le cas présent, pris égal à l'heure d'écriture de la trame, le temps entre la création et l'émission de la trame étant suffisamment court pour être négligé par rapport à l'unité du temps affichée). Et similairement l'ensemble de données obtenu D_i est l'horodatage du début de mise en oeuvre de l'étape 101 à l'itération i du procédé, i = 1 à n. Dans d'autres modes de réalisation, l'ensemble de données D_n est (ou comporte en outre) une température fournie par un capteur, un niveau de déformation etc.

Ainsi, lors de la construction de la trame TR_n, le module d'émission BLE 11 insère :
- sélectivement, dans le premier champ 50_1 de données de la trame TR_n : l'ensemble de données D_n obtenu à l'étape 101 de l'itération n ;
- sélectivement, dans le j^{ème} second champ 50_2j de données de la trame TR_n, j = 1 à N, l'ensemble de données D_(n-j) précédemment transmis (i.e. à l'itération n-j du procédé) dans le premier champ 50_1 de la trame TR_(n-j).

Dans une étape 103, le module d'émission BLE 11 sélectionne parmi les P canaux dédiés à la transmission BLE, celui sur lequel la trame TR_n sera sélectivement émise, en appliquant cette règle :
Le canal sélectionné pour la transmission de la trame TR_n est celui succédant immédiatement, dans ladite boucle prédéfinie des canaux, au canal qui avait été sélectionné pour la transmission de la trame TR_(n-1) au temps de transmission t_(n-1), lors de l'itération (n-1) du procédé ; le canal précédemment sélectionné pour la transmission de la trame TR_n-j étant celui succédant, dans ladite boucle définie, au canal qui avait été sélectionné pour la transmission de la trame TR_(n-j-1) au temps de transmission t_(n-j-1).

Dans une étape 104, le module d'émission BLE 11 émet au temps de transmission t_n la trame TR_n sur le canal ainsi sélectionné.

La trame TR_n n'est ainsi émise que sur un seul des canaux parmi les P canaux dédiés. La trame TR_n+1 qui sera émise juste après TR_n ne sera émise que sur le canal alors sélectionné à l'itération n+1. L'ensemble de données D_n sera inséré, lui, dans un champ de l'historique 50_2 de TR_n+1.

Dans le cas présent, la trame TR_n comporte en outre :
- dans un champ 50_01, la longueur de la trame, et dans un champ 50_02 son type, chacun de ces deux champs de taille 1 octet,
- dans un champ 50_03, l'identifiant de compagnie, de taille 2 octets,
- dans un champ 50_04, un identifiant du dispositif EM 10 (par exemple, dans le cas considéré, l'identifiant UID NFC de ce dispositif, le champ 50_0 ayant ici une taille de 8 octets) et comporte la valeur n d'itération, dans un champ 50_3, ayant par exemple pour taille 2 octets.

La taille occupée par les données indiquées en figure 4 dans le cas considéré est de 30 octets (sur, par exemple, 31 disponibles).

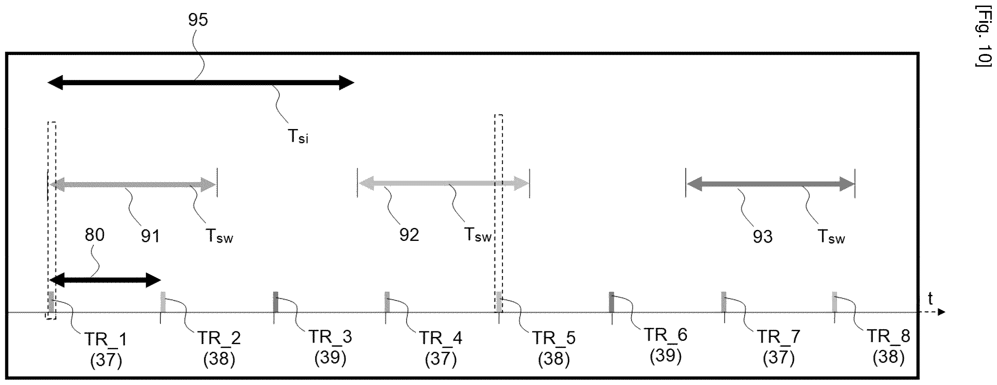

La section basse de la figure 10 illustre, dans un mode de réalisation de l'invention, l'émission BLE en mode advertising des trames dans le temps, par le module d'émission BLE 11 : émission d'une trame d'advertising sur 1 seul canal, rotation de canal à chaque nouvel envoi de trame et ajout de données d'historique pour limiter la perte de données (dans le cas considéré 6 données précédentes minimum). L'énergie requise pour l'émission BLE d'un jeu de données est de 10-15 µJ/trame contre 33 à 45 µJ/trame sur un système de l'art antérieur.

La trame TR_1, respectivement TR_2, respectivement TR_3, ..., respectivement TR_8 etc. est émise par le module d'émission BLE 11 (broadcaster/advertiser) au temps d'émission t_1, respectivement t_2, respectivement t _3, ..., respectivement t_8 etc, sur le canal 37, respectivement 38, respectivement 39, ... respectivement sur le canal 38, etc.

La durée entre 2 envois de données BLE successives (i.e. entre des temps d'émission successifs t_i et t_i+1 ), i.e. l'intervalle d'advertising, est paramétrable entre 20 ms et 10.24 secondes (advertising interval, cf. norme BLE), avec classiquement un intervalle d'advertising 80 de durée comprise entre 100 ms et 2 s pour la plupart des usages. Cependant, cet envoi n'est pas nécessairement synchronisé, c'est-à-dire que, dans des modes de réalisation, cette durée change au fil du temps, notamment si le dispositif EM 10 est autonome en énergie, et comprend un système de récupération d'énergie : le dispositif EM 10 prépare et envoie alors une trame sur un canal seulement quand (et dès que) l'énergie nécessaire est disponible.

La taille des ensembles de données et la profondeur de l'historique peuvent être modifiées, en fonction de la taille de la trame. Par exemple, chacun des ensembles de données a une taille de 4 octets et N =3, ou chacun des ensembles de données à une taille de 1 octet et N = 15 etc.

Le module de réception BLE 21 ou Observer/scanner, de façon classique, scanne par salve à des intervalles périodiques s'il y a des données envoyées par un émetteur. A chaque intervalle, il scanne (i.e. il lit) sur 1 canal en rotation sur les P canaux dédiés, ici successivement sur chacun des canaux 37, 38, 39.

La durée entre 2 lectures (intervalle de scanning 95, en anglais « *scanning interval* ») et la durée du scan T_{SW} (en anglais « *scanning window* » sont paramétrables selon les applications visées (entre 20 ms et 10,24 s) avec classiquement 50 ms pour l'intervalle de scanning et 30 ms pour la durée du scan T_{SW}.

Ainsi, en référence à la section haute de la figure 10 illustrant le fonctionnement du récepteur BLE 21, une première lecture 91 est déclenchée par le module de réception BLE 21 pendant la durée T_{SW} sur le canal 37 (selon les modes de réalisation, la<même boucle sur les canaux qu'à l'émetteur est mise en oeuvre au récepteur, ou encore des variations sont effectuées par rapport à l'ordre des canaux : par exemple 37-38-39, 37-39-38; la deuxième lecture 92, de durée T_{SW}, débute un intervalle de scanning après le début de la lecture 91, et a lieu cette fois sur le canal 38 ; la troisième lecture 93, de durée T_{SW}, débute un intervalle de scanning après le début de la lecture 92, et a lieu cette fois sur le canal 39. La prochaine lecture a lieu sur le canal 37 à nouveau etc.

Ainsi, la solution selon l'invention comprend les caractéristiques suivantes :
- envoyer les données sur un seul canal d'advertising (ici : canal 37, 38 ou 39) ; ceci permet de réduire d'un facteur 3 la quantité d'énergie requise pour l'envoi d'une trame (envoyée sur les 3 canaux successivement dans l'art antérieur) ; cette technique seule n'est pas recommandée par l'homme de l'art car l'immunité aux perturbations radio n'est plus garantie ;
- effectuer une rotation de canal à chaque nouvelle trame envoyée ; cette stratégie améliore l'immunité aux perturbations radio, mais réduit le nombre de trame reçues par le récepteur BLE 21 (effectuant lui-même une rotation de canal à chaque phase de lecture, de manière asynchrone avec l'émetteur en mode advertising).
- ajouter l'historique des données dans la trame, par exemple jusqu'au maximum de données permises par la taille d'une trame d'advertising 50, pour limiter la perte de données (liée à la non synchronisation des rotations de canal de l'émetteur et du récepteur en mode advertising).

L'invention comporte les avantages suivants par rapport à l'état de l'art :
- pleinement compatible avec un lecteur BLE classique (i.e. de l'art antérieur) type smartphone ;
- limitation de l'énergie consommée par trame : la solution divise quasiment l'énergie requise par 3 pour P = 3 de manière théorique par rapport à un usage normal sur smartphone, et par environ 2,6 de manière expérimentale (en lien avec l'augmentation de la longueur de trame pour l'historique) ;
- réception d'une trame sur trois en moyenne statistique si le récepteur est en écoute permanente; et limité à une trame sur six en moyenne statistique si le récepteur a des phases d'écoutes (scanning window) et d'attente de même durée ;
- conservation de l'immunité au canal surchargé via la rotation de canal en transmission ;
- récupération de la majorité des données grâce aux données historiées intégrées à la trame (par exemple au minimum 6 données, sinon dans la limite de la taille de la trame) ;
- solution idéale pour des données cumulatives (car en cas de perte d'info : interpolation possible) ;
- solution idéale dans le cas d'un système EM 10 avec récupération d'énergie fonctionnant en mode « Intermittent Computing » (déclenchement d'action uniquement lorsque l'énergie est suffisante) :
- augmentation du nombre d'envoi et donc de la granularité des mesures (diminue la latence par 3) ;
- diminution de la taille de l'élément de stockage capacitif et donc le temps de démarrage du système.

Les étapes du procédé dans le module d'émission BLE 11, respectivement les étapes du procédé dans le module de réception 21, peuvent être mises en oeuvre par l'exécution sur un processeur, d'instructions logicielles stockées dans une mémoire, le module d'émission BLE 11, respectivement le module de réception 21 comportant une telle mémoire et un tel processeur. Alternativement, elles peuvent être mises en oeuvre par un hardware dédié, typiquement un circuit intégré numérique, soit spécifique (ASIC) ou basé sur une logique programmable (par exemple FPGA/Field Programmable Gate Array).

La communication BLE selon l'invention correspond donc, dans un mode de réalisation considéré à titre d'exemple à
- émission sur 1 seul canal (rotation à chaque nouvel envoi) , soit [Puissance 0dBm, débit 1Mbps, 46 octets] : 15 µJ ;
- réception sur 1 canal à la fois, en rotation asynchrone avec l'émission (d'où perte de donnée et besoin d'historique des données) ;
qui est donc à comparer à l'Advertising classique avec envoi de chaque donnée successivement sur 3 canaux :
Énergie : 33 - 46 µJ par trame advertising (32 octets dont 16 octets pour les données) (en émission),
SPW-2, " 3 packets of 39 octets " (dont 23 octets pour les données), puissance 0dBm, débit inconnu (1 ou 2 Mbps) : 33 µJ (en émission),
   (trame complète de 47 octets dont 31 pour les données)

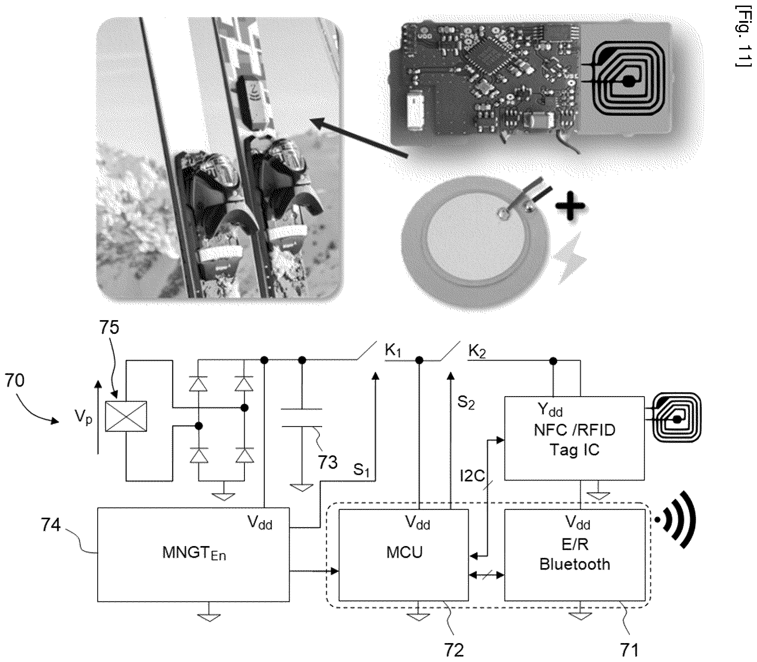

La figure 11 illustre schématiquement la mise en oeuvre d'un mode de réalisation de l'invention sur un dispositif IOT 70 mis en place sur un ski alpin et permettant de monitorer la durée et l'intensité de l'utilisation du ski (cumul dans le temps) et la classification du niveau du skieur (l'évaluation de l'intensité de déformation du ski). Les données du capteur sur le ski sont transmises en Bluetooth Low Energy (BLE) (mode advertising) en temps réel depuis le dispositif loT à destination d'un récepteur, par exemple un Smartphone. Les données ainsi transmises sont alors horodatées par le smartphone et peuvent être mises en correspondance avec les données issues des capteurs du Smartphone (GPS, Gyromètre, Accéléromètre). Cela permet la classification du niveau du skieur à chaque portion de descente sans que le skieur n'ait à récupérer les données du capteur via un scan NFC en fin de descente. La communication BLE permet d'obtenir un niveau d'information maximum sur la descente courante, à condition que le smartphone écoute et récupère les trames BLE, car les données ne sont pas sauvegardées dans le dispositif loT.

Ce dispositif iOT 70 est autonome en énergie et comporte un système de récupération d'énergie piézoélectrique (conversion de l'énergie de déformation du ski par un dispositif piézoélectrique), avec éléments piézoélectriques 75 générant l'énergie qui alimente le dispositif IOT. Il dispose de très peu d'énergie (de manière asynchrone) pour effectuer la transmission des données en BLE. L'énergie générée étant faible, il est primordial d'avoir une solution à très basse consommation pour la transmission des données en BLE depuis le dispositif loT afin de rendre possible la communication sans fil et maximiser la fréquence des émissions de données.

Le système de transmission de donnée ultra basse consommation comprend :
- un Système-Sur-Puce (SOC pour "System-On-Chip') nRF52810 avec un Emetteur/Récepteur Bluetooth 71 et un microcontrôleur (MCU) 72 ;
- un condensateur 73 de stockage d'énergie : 10 µF ;
- un circuit de gestion de l'énergie 74 (avec détecteurs de tensions) permettant un envoi Bluetooth (trame 47 octets) dès que la capacité de stockage est pleine.

Il est adapté pour émettre sur 1 canal en rotation comme décrit ci-dessous conformément à l'invention (ce qui consomme 10-15 µJ/trame : i.e. équivalent de l'énergie stockée dans la capacité.

Il est adapté pour ajouter dans la trame, comme représenté en figure 4, outre la donnée de temps courante 50_1, un historique des mesures constitué des 7 mesures précédemment transmises, 50_21 à 50_27.

L'ajout d'historique dans la trame selon l'invention permet de collecter l'ensemble des données manquantes au cours d'une descente de ski (trajectoire schématisée 200), comme l'illustre la figure 3, où l'ensemble des ronds indique les trames envoyées conformément à la composition de la figure 4, seules les trames correspondant aux ronds sans croix à l'intérieur étant effectivement reçues ; les trames correspondant aux ronds avec croix à l'intérieur n'étant pas reçues et les mesures de temps courant (champ 50_1) dans ces trames correspondant aux ronds avec croix à l'intérieur étant reconstruites grâce à l'historique présent dans les trames reçues.

Dans l'exemple considéré où les ensembles de données sont les temps d'émission, le récepteur déduit en fonction de l'ensemble des ensembles de données successifs reçus, la durée totale d'utilisation du ski.

## Revendications

1. Procédé de télécommunication Bluetooth Low Energy mis en oeuvre entre un premier dispositif de télécommunication (10) et un deuxième dispositif de télécommunication (20),
des trames TR_i ayant été précédemment transmises au deuxième dispositif de télécommunication (20) par le premier dispositif de télécommunication (10) à des temps de transmission successifs respectifs t_i, i = n-N à n-1, N, i et n entiers et N ≥3 ;
P canaux de télécommunication ayant été attribués pour les télécommunications Bluetooth Low Energy entre lesdits premier et deuxième dispositifs ;
ledit procédé comprenant les étapes suivantes mises en oeuvre par le premier dispositif de télécommunication (10) pour la transmission, au temps de transmission t_n, d'un nouvel ensemble de données à transmettre D_n :
- obtention du nouvel ensemble de données à transmettre D_n ;
- construction d'une trame, nommée trame TR_n, en fonction d'au moins l'ensemble de données D_n obtenu ;
- sélection d'un canal de télécommunication parmi lesdits P canaux de télécommunication ayant été attribués ;
- transmission, sur le canal sélectionné, de la trame T_n construite ;
ledit procédé étant **caractérisé en ce que** les étapes suivantes sont mises en oeuvre par le premier dispositif de télécommunication (10) pour la transmission au temps de transmission t_n de la trame TR_n, chacune des trames TR_i, i = n-N à n, étant conforme à un format de trame prédéfini comportant un premier champ de données (50_1) destiné à comporter les données courantes et comportant N seconds champs de données (50_2) destiné à comporter des données transmises dans le premier champ de trames précédemment transmises ;
- lors de la construction de la trame TR_n :
insertion, dans le premier champ de données (50_1) de la trame TR_n, de l'ensemble de données D_n ;
insertion dans le jème second champ de données de la trame TR_n, j = 1 à N, de l'ensemble de données D_(n-j) précédemment transmis dans le premier champ de la trame TR_(n-j) ;
- lors de la sélection du canal de communication :
une boucle ayant été définie sur les P canaux ordonnés selon un ordre déterminé, le canal sélectionné pour la transmission de la trame TR_n est celui succédant, dans ladite boucle définie, au canal qui avait été sélectionné pour la transmission de la trame TR_(n-1) au temps de transmission t_(n-1) ; le canal précédemment sélectionné pour la transmission de la trame TR_n-j étant celui succédant, dans ladite boucle définie, au canal qui avait été sélectionné pour la transmission de la trame TR_(n-j-1) au temps de transmission t_(n-j-1), j = 1 à N ;
ladite trame TR_n n'étant en outre émise que sur le seul canal sélectionné et n'étant notamment pas réémise sur un quelconque autre des P canaux.

2. Procédé de télécommunication Bluetooth Low Energy selon la revendication 1, selon lequel le délai entre deux temps de transmission successifs est constant.

3. Procédé de télécommunication Bluetooth Low Energy selon la revendication 1 ou 2, selon lequel l'ensemble de données D_i indique le temps de transmission t_i, i= n-N à n, de la trame TR i.

4. Procédé de télécommunication Bluetooth Low Energy selon l'une quelconque des revendications précédentes, selon lequel, une durée de scan T_{SW} ayant été prédéfinie et une période T_{Si} ayant été définie, le deuxième dispositif de télécommunication (20) met en oeuvre, toutes les périodes T_{Si} une étape de scan pendant la durée de scan prédéfinie T_{SW}. sur un canal considéré parmi les P canaux, lesdits P canaux étant considérés chacun l'un après l'autre, avant de recommencer.

5. Programme d'ordinateur, destiné à être stocké dans la mémoire d'un premier dispositif de télécommunication (10) comprenant en outre un microcalculateur, ledit programme d'ordinateur comprenant des instructions qui, lorsqu'elles sont exécutées sur le microcalculateur, mettent en oeuvre les étapes d'un procédé selon l'une des revendications précédentes.

6. Dispositif de télécommunication (10), nommé ci-après premier dispositif de télécommunication (10), adapté pour mettre en oeuvre une télécommunication Bluetooth Low Energy avec un deuxième dispositif de télécommunication (20),
des trames TR_i ayant été précédemment transmises au deuxième dispositif de télécommunication (20) par le dispositif de télécommunication (10) à des temps de transmission successifs respectifs t_i, i = n-N à n-1, N, i et n entiers et N ≥3 ;
P canaux de télécommunication ayant été attribués pour les télécommunications Bluetooth Low Energy entre lesdits premier et deuxième dispositifs ;
le premier dispositif de télécommunication (10) étant adapté, en vue de transmettre, au temps de transmission t_n, un nouvel ensemble de données à transmettre D_n, pour obtenir le nouvel ensemble de données à transmettre D_n, pour construire une trame, nommée trame TR_n, en fonction d'au moins l'ensemble de données D_n obtenu, pour sélectionner un canal de télécommunication parmi lesdits P canaux de télécommunication ayant été attribués, pour transmettre, sur le canal sélectionné, la trame T_n construite;
ledit premier dispositif de télécommunication étant **caractérisé en ce que** le premier dispositif de télécommunication (10), en vue de la transmission au temps de transmission t_n de la trame TR_n, chacune des trames TR_i, i = n-N à n, étant conforme à un format de trame prédéfini comportant un premier champ de données (50_1) destiné à comporter les données courantes et comportant N seconds champs de données (50_2) destiné à comporter des données transmises dans le premier champ de trames précédemment transmises, lors de la construction de la trame TR_n, insérer, dans le premier champ de données (50_1) de la trame TR_n, l'ensemble de données D_n, insérer dans le jème second champ de données de la trame TR_n, j = 1 à N, l'ensemble de données D_(n-j) précédemment transmis dans le premier champ de la trame TR_(n-j) ;
ledit premier dispositif de télécommunication (10) étant adapté pour, une boucle ayant été définie sur les P canaux ordonnés selon un ordre déterminé, sélectionner comme canal de communication pour la transmission de la trame TR_n, celui succédant, dans ladite boucle définie, au canal qui avait été sélectionné pour la transmission de la trame TR_(n-1) au temps de transmission t_(n-1) ; le canal précédemment sélectionné pour la transmission de la trame TR_n-j étant celui succédant, dans ladite boucle définie, au canal qui avait été sélectionné pour la transmission de la trame TR_(n-j-1) au temps de transmission t_(n-j-1), j = 1 à N ;
ladite trame TR_n n'étant en outre émise que sur le seul canal sélectionné et n'étant notamment pas réémise sur un quelconque autre des P canaux.

7. Dispositif de télécommunication selon la revendication 6, adapté pour placer un délai constant entre deux temps de transmission successifs.

8. Dispositif de télécommunication selon la revendication 6 ou 7, adapté pour indiquer dans l'ensemble de données D_i le temps de transmission t_i, i= n-N à n, de la trame TR J.

9. Système de télécommunication Bluetooth Low Energy comprenant un premier dispositif de télécommunication (10) selon l'une quelconque des revendications 6 à 8, dans lequel une durée de scan T_{SW} ayant été prédéfinie et une période T_{Si} ayant été définie, ledit système comprenant en outre le deuxième dispositif de télécommunication (20), lequel est adapté pour effectuer, toutes les périodes T_{Si} un scan pendant la durée de scan prédéfinie T_{SW} sur un canal considéré parmi les P canaux, lesdits P canaux étant considérés chacun l'un après l'autre, avant de recommencer.
